Europäisches Patentamt

European Patent Office

Office européen des brevets

(11) Numéro de publication : **0 419 313 B1**

(12) # FASCICULE DE BREVET EUROPEEN

(45) Date de publication du fascicule du brevet :
**25.11.92 Bulletin 92/48**

(51) Int. Cl.$^5$ : **B62D 25/12, B60K 13/06**

(21) Numéro de dépôt : **90402458.5**

(22) Date de dépôt : **07.09.90**

(54) **Capot moteur pour véhicules automobiles qui possède au moins une prise d'air de refroidissement.**

(30) Priorité : **22.09.89 FR 8912459**

(43) Date de publication de la demande :
**27.03.91 Bulletin 91/13**

(45) Mention de la délivrance du brevet :
**25.11.92 Bulletin 92/48**

(84) Etats contractants désignés :
**DE ES GB IT**

(56) Documents cités :
**EP-A- 0 111 430**
**DE-A- 2 034 232**
**US-A- 4 646 864**
**PATENT ABSTRACTS OF JAPAN vol. 6, no.
199 (M-162)(1077) 08 octobre 1982, & JP-A-57
104470 (NISSAN JIDOSHA K.K.) 29 juin1982,**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Cuni, Jean-Marie
8, rue des Luthiers
F-93240 Stains (FR)**
Inventeur : **Fouré, Hervé
32, rue Fragonard
F-78130 Les Mureaux (FR)**

(74) Mandataire : **Ernst-Schonberg, Michel
REGIE NATIONALE DES USINES RENAULT (S.
0267) 8 & 10, avenue Emile Zola
F-92109 Boulogne Billancourt Cédex (FR)**

EP 0 419 313 B1

Jouve, 18, rue Saint-Denis, 75001 PARIS

## Description

L'invention concerne les capots moteurs pour véhicules automobiles avec des prises d'air de refroidissement et concerne plus particulièrement un capot avant du type comportant une peau extérieure en matière plastique collée sur un squelette de raidissement qui lui confère une résistance à la torsion et à la flexion.

L'invention concerne plus particulièrement un capot en matière plastique dans lequel le squelette de raidissement est constitué à partir d'une matière plastique moulable comportant des nervures et des gouttières obtenues au cours de l'opération de mise en forme pour constituer avec la peau extérieure des prises d'air favorisant l'entrée d'air de refroidissement du groupe moto propulseur au cours de l'avancement du véhicule.

On connaît des capots constitués par une plaque en matériau plastique, par exemple en matière plastique thermodurcissable emboutie et mise en forme à chaud ou à froid, éventuellement renforcée de fibres de verre, de façon à réaliser, selon des techniques connues, des variations d'épaisseur de forme et des nervures de renforcement.

Lorsque les capots doivent posséder des prises d'air celles-ci sont agencées sur la peau extérieure qui présente des déformations locales. Dans ce cas la face du capot tournée vers le compartiment du groupe motopropulseur doit porter des moyens additionnels de canalisation de l'air et d'évacuation de l'eau.

Lorsque les prises d'air sont différemment orientées, l'agencement desdits moyens complique considérablement le processus de fabrication du capot.

Par ailleurs de telles prises d'air modifient l'orientation des flux d'air sous le capot moteur et compliquent notablement les techniques d'évacuation de l'eau de ruissellement.

L'invention a pour objet de remédier l'inconvénient précité et concerne un capot moteur caractérisé en ce que la prise d'air débouche dans une gouttière dont les bords s'étendent de part et d'autre d'une première chicane formée par la peau extérieure pour infléchir le flux d'air entre ladite prise d'air et le compartiment moteur.

Le capot ainsi réalisé est constitué par deux parties fonctionnelles dont l'une guide les filets d'air et dont l'autre modifie et dirige le flux d'air vers le groupe motopropulseur du véhicule.

D'autres caractéristiques et avantages de l'invention apparaîtront la lecture de la description d'un exemple de réalisation du capot, faite en référence au dessin annexé dans lequel :

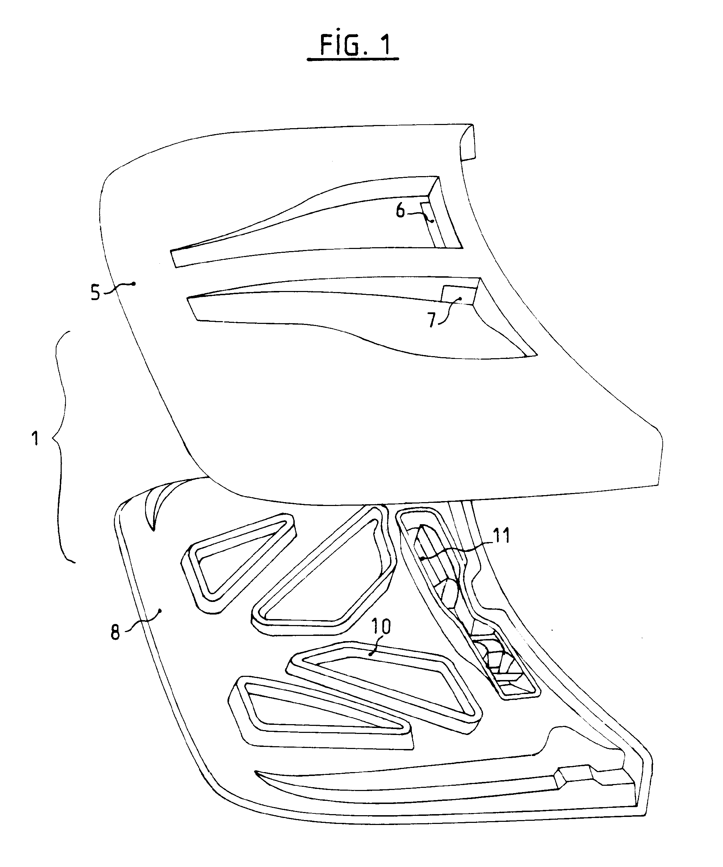

La figure 1 est une vue en perspective des deux éléments constitutifs du capot.

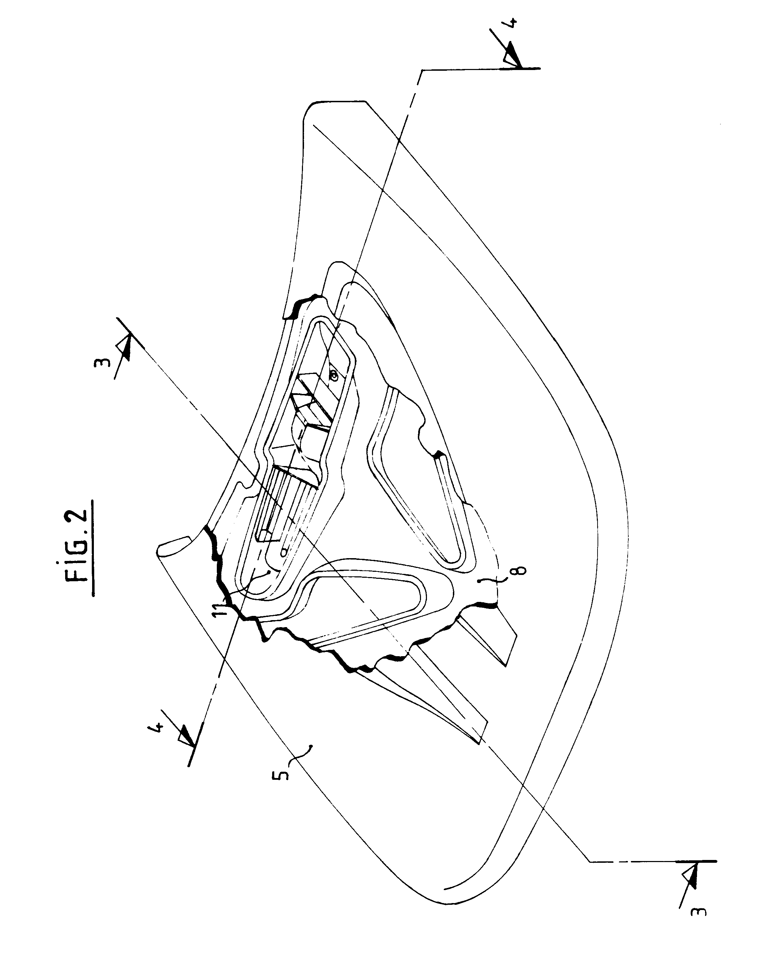

La figure 2 est une vue en perspective avec arrachement partiel du capot assemblé.

La figure 3 est une vue en coupe longitudinale du capot selon la ligne 3-3 de la figure 2.

La figure 4 est une vue en coupe transversale du capot selon la ligne 4-4 de la Figure 2.

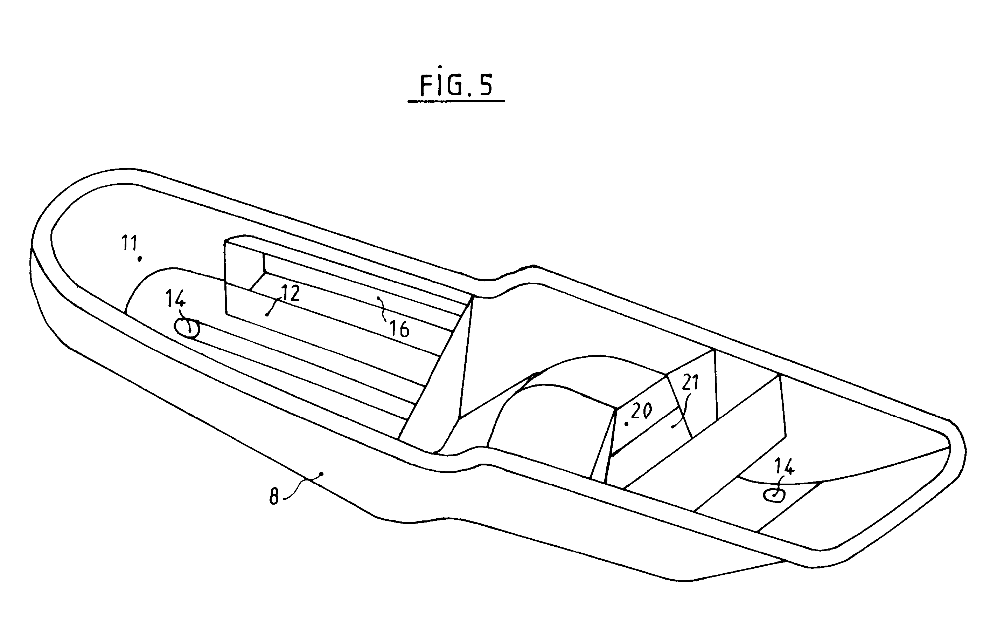

La figure 5 est une vue en perspective de la partie fonctionnelle du squelette destiné au guidage de l'air.

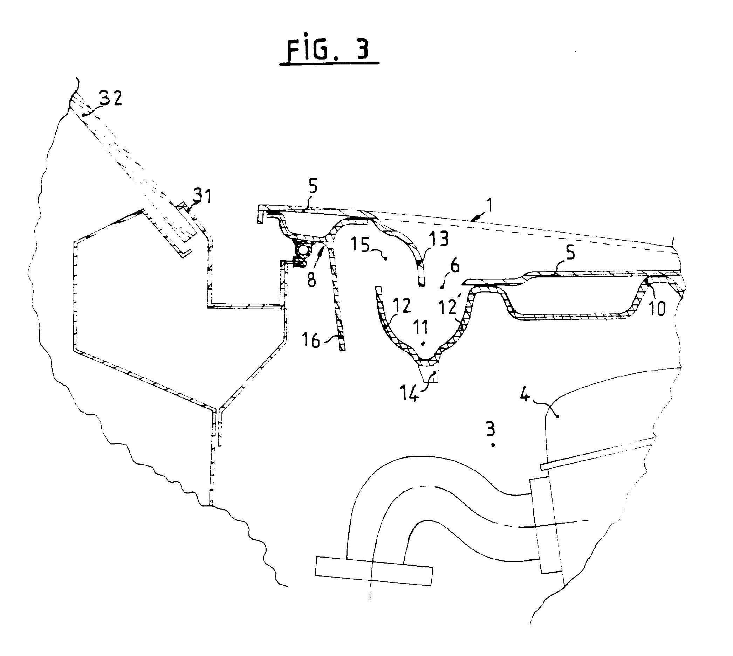

En référence a la figure 3 le capot moteur 1 du véhicule dont on a représenté l'auvent 31 et le pare-brise 32 est réalisé sous la forme d'un couvercle articulé qui ferme un compartiment 3 recevant notamment le groupe motopropulseur 4.

Le capot 1 est constitué ainsi que cela est montré au dessin par une peau extérieure 5 sur laquelle ont été formées deux prises d'air de refroidissement 6.7 du groupe motopropulseur. La peau extérieure 5 est collée sur un squelette 8 de raidissement formé dans une matière plastique moulable comportant un certain nombre de nervures 10 et une gouttière 11.

Selon l'invention la prise d'air 6 débouche dans la gouttière 11 dont les bords 12, 12′ s'étendent transversalement de part et d'autre d'une première chicane 13 formée sur la peau extérieure 5. Cette mesure constructive permet de fléchir le flux d'air entre ladite prise d'air 6 et le compartiment moteur 3. Selon une autre caractéristique du capot, la paroi 12 se prolonge verticalement et communique avec le compartiment 3 par des orifices 14 qui permettent l'évacuation de l'eau de condensation et de ruissellement.

Ainsi que cela est montré à la Figure 3, la paroi 12 de la gouttière s'étend parallèlement à la chicane 13 et est percée d'une ouverture 15 destinée à favoriser la canalisation de la veine d'air entre la paroi 12 et une paroi de déflection 16 formée par un bord tombé du squelette 8.

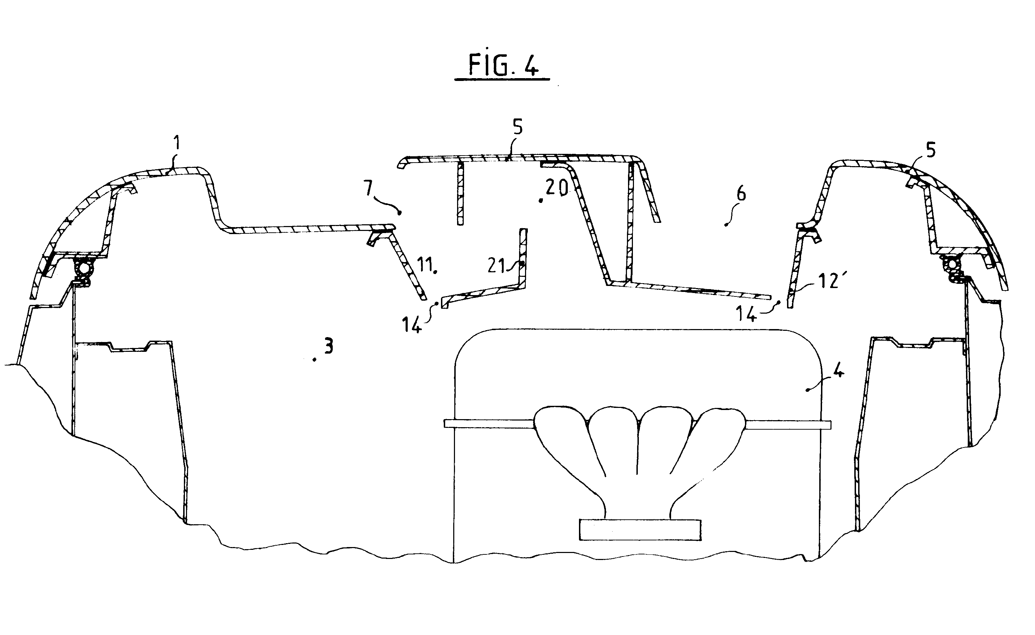

Selon la figure 4, le fond de la gouttière 11 est en communication avec une cavité 20 séparée par une deuxième chicane 21 contenue dans un plan perpendiculaire à celui de la chicane 13 et formée sur la peau extérieure 5.

## Revendications

1. Capot moteur pour véhicules automobiles qui possède au moins une prise d'air de refroidissement et dans lequel une peau extérieure (5) est collée sur un squelette (8) de raidissement formé dans une matière plastique moulable comportant des nervures (10), caractérisé par le fait que la prise d'air (6) débouche dans une gouttière (11) formée sur le squelette (8) et dont les bords (12, 12′) s'étendent de part et d'autre d'une première chicane (13) formée sur la peau extérieure (5) pour fléchir le flux d'air entre ladite prise d'air (6) et le compartiment moteur.

2. Capot moteur selon la revendication 1, caractérisé par le fait qu'une gouttière (11) transversale se prolonge par une cavité (20) séparée par une deuxième chicane (21) contenue dans un plan perpendiculaire à celui de la chicane (13).

3. Capot moteur selon l'ensemble des revendications 1 et 2, caractérisé par le fait que l'une des parois (12) de la gouttière se prolonge verticalement dans le compartiment moteur par un élément déflecteur (16).

**Patentansprüche**

1. Motorhaube für Kraftfahrzeuge, die mindestens eine Einlaßöffnung für Kühlluft aufweist, wobei eine Außenwand (5) mit einem verstärkenden Traggerüst (8) verklebt ist, das aus gießbarem Kunststoff besteht und das Rippen (10) aufweist, **dadurch gekennzeichnet**, daß die Einlaßöffnung (6) in eine im Traggerüst (8) ausgebildete Wasserrinne (11) mündet, deren Ränder (12, 12') sich beidseits einer ersten Führungskante (13) auf der Außenwand (5) erstrecken, um den Luftstrom zwischen der Einlaßöffnung (6) und dem Motorraum zu verteilen.

2. Motorhaube nach Anspruch 1, **dadurch gekennzeichnet**, daß eine querverlaufende Wasserrinne (11) durch einen Raum (20) verlängert ist, welcher durch eine zweite Führungskante (21) abgetrennt ist, die in einer Ebene verläuft, welche senkrecht zu derjenigen der Führungskante (13) ist.

3. Motorhaube nach der Gesamtheit der Ansprüche 1 und 2, **dadurch gekennzeichnet**, daß eine der Wände (12) der Wasserrinne vertikal in den Motorraum durch ein Führungsteil (16) verlängert ist.

**Claims**

1. An engine bonnet for motor vehicles which has at least one cooling air intake and in which an external skin (5) is glued on to a stiffening framework (8) formed of a mouldable plastics material comprising ribs (10) characterised in that the air intake (6) opens into a channel (11) which is formed on the framework (8) and the edges (12, 12') of which extend on respective sides of a first baffle (13) which is formed on the external skin (5) to deflect the flow of air between said air intake (6) and the engine compartment.

2. An engine bonnet according to claim 1 characterised in that a transverse channel (11) is extended by a cavity (20) which is separated by a second baffle (21) contained in a plane perpendicular to that of the baffle (13).

3. An engine bonnet according to the combination of claims 1 and 2 characterised in that one of the walls (12) of the channel is extended vertically into the engine compartment by a deflector element (16).

# FIG. 1

FiG.2

# FIG. 3

FIG. 4

EP 0 419 313 B1

# FIG.5

EP 0 419 313 B1